# EUROPÄISCHE PATENTSCHRIFT

(11) **EP 3 535 119 B1**
(45) Veröffentlichungstag und Bekanntmachung des Hinweises auf die Patenterteilung: **04.03.2020**
(21) Anmeldenummer: 19701834.4
(22) Anmeldetag: 24.01.2019
(51) Int. Cl.: B32B 7/10, B32B 27/08, B32B 27/20, B32B 27/32, B32B 27/40, B32B 37/00

(54) **INLINE BESCHICHTETE BIAXIAL ORIENTIERTE POLYPROPYLENFOLIE UND VERFAHREN ZU IHRER HERSTELLUNG**
INLINE COATED BIAXIALLY ORIENTED POLYPROPYLENE FILM AND METHOD FOR THE PRODUCTION THEREOF
FILM DE POLYPROPYLÈNE À ORIENTATION BIAXIALE REVÊTUS À LA CHAÎNE ET PROCÉDÉ DE FABRICATION DE CELLE-CI

(30) Priorität: 26.01.2018 DE 102018101747
(43) Veröffentlichungstag der Anmeldung: 11.09.2019
(73) Patentinhaber: Brückner Maschinenbau GmbH & Co. KG, 83313 Siegsdorf (DE)
(72) Erfinder: LINDEMANN, Willi, 83404 Mitterfelden (DE); WOLF, Martin, 83278 Traunstein (DE)
(74) Vertreter: Flach Bauer Stahl Patentanwälte Partnerschaft mbB
(86) Internationale Anmeldenummer: PCT/EP2019/051783
(87) Internationale Veröffentlichungsnummer: WO 2019/145442

(56) Entgegenhaltungen:
- WO-A1-2013/041469
- WO-A1-2017/202827

## Beschreibung

### Einleitung

Die vorliegende Erfindung betrifft eine biaxial orientierte Polypropylenfolie (BOPP) umfassend Schichten (A) bis (D), worin Schichten (B) bis (D) biaxial orientiertes Polypropylen enthalten und Schicht (A) Polyurethan und Nanopartikel enthält und eine Schichtdicke von 25 bis 300 nm aufweist, Schicht (B) Polymere mit funktionellen Gruppen umfasst, welche mit Polyurethan kovalente Bindungen auszubilden vermögen und direkt mit Schicht (A) verbunden ist, Schicht (C) wenigstens eine Schichtdicke von 50 % der Gesamtdicke der Folie aufweist und Schicht (D) eine Außenschicht der Folie darstellt, welche Antiblockmittel enthält. Die Erfindung betrifft ferner Verfahren zur Herstellung solcher Folien.

### Stand der Technik

Kunststofffolien umfassend oder bestehend aus biaxial orientiertem Polypropylen (BOPP-Folien, auch biaxial verstreckte Polypropylenfolien genannt) sind seit langem bekannt und werden für verschiedenste Verwendungszwecke eingesetzt. Insbesondere als preiswerte Materialien zur Verpackung von Lebensmitteln spielen sie eine wichtige Rolle. BOPP-Folien und Verfahren zu ihrer Herstellung sind zum Beispiel in der DE 196 22 083 A1 beschrieben. In Spalte 1 dieser Druckschrift wird ein allgemeines Verfahren zur Herstellung von BOPP-Folien beschrieben. Mechanische Eigenschaften, Transparenz, Barriereeigenschaften und dergleichen stellen oft wichtige Eigenschaften bei der Verwendung solcher Polypropylenfolien dar. Bei der Verpackung von luft- und/oder wasserempfindlichen Gegenständen wie Lebensmitteln, Arzneimitteln und dergleichen, sind die guten Barriereeigenschaften von Polypropylen insbesondere gegenüber Sauerstoff und Wasser wichtige Vorteile solcher Folien. Gute Barriereeigenschaften führen zu einer längeren Haltbarkeit der verpackten luft- und/oder wasser-empfindlichen Gegenstände. Dies gilt insbesondere für Lebensmittel. Ein Teil der Qualitätssicherung durch die Kunststofffolie der Verpackung ist bei zahlreichen Lebensmitteln ein Schutz gegen Aromaverluste und die Verhinderung des Austritts von geruchsintensiven Stoffen sowie, in zahlreichen Fällen, ein Schutz vor Luftsauerstoff und/oder vor Luftfeuchtigkeit und/oder vor Feuchtigkeitsverlusten aus der Ware. Folien mit derartigen Eigenschaften werden auch als Barrierefolien oder Sperrschichtfolien bezeichnet. Zur Verbesserung der Barriereeigenschaften sind verschiedenste Maßnahmen angewendet worden, wie die monoaxiale oder biaxiale Orientierung der Polypropylenfolien (MOPP- oder BOPP-Folien) und die Verwendung von Beschichtungen die die Barriereeigenschaften erhöhen, insbesondere auch die Beschichtung mit Metallen und Metalloxiden oder anderen Polymeren als Polypropylen.

Neben den Gebrauchseigenschaften sind bei Folien jedoch auch bestimmte Eigenschaften erforderlich, die die kostengünstige Herstellung ermöglichen. Hierzu zählt vor allem die Beschaffenheit der Oberflächen, die einerseits glatt genug sein müssen um eine geschlossene Beschichtung durch Metallisierung und dergleichen zu ermöglichen, andererseits aber eine genügende Oberflächenrauheit aufweisen müssen um für die Verarbeitung auf Rollen und so weiter genügend Reibung zu erzeugen. Ansonsten wäre eine Herstellung der Folien durch die üblichen hocheffizienten Produktionsstraßen mit hohen Vortriebsgeschwindigkeiten nicht möglich. Um die Bedruckbarkeit der Folien zu gewährleisten, muss die Folienoberfläche ebenfalls bestimmte Eigenschaften aufweisen, zu denen eine geeignete Oberflächenspannung gehört.

Hochfeste Folien mit ausgezeichneten Barriereeigenschaften sind aus der DE 10 2005 020 913 B3 bekannt. Die vorteilhaften Barriereeigenschaften und Oberflächeneigenschaften sind auf eine zusätzliche Polyamid-haltige Schicht zurückzuführen, die coextrudiert wird. Diese Folien sind jedoch in der Herstellung relativ aufwändig und die Materialkosten für das Polyamid sind hoch, auch, weil es in großen Mengen eingesetzt wird. Ferner könnte vor allem die Oberflächenbeschaffenheit der Polyamid Schicht verbessert werden, um bei Aufbringen einer Metall- oder Metalloxidschicht eine bessere Haftung der Metall- oder Metalloxidschicht zu erreichen und die Verarbeitbarkeit zu verbessern.

Zum allgemeinen technischen Hintergrund der Erfindung gehört auch die WO 2017/202827 A1.

### Aufgabe der Erfindung

Es war daher die Aufgabe der vorliegenden Erfindung, eine Folie zur Verfügung zu stellen, die vorteilhafte Barriereeigenschaften aufweist, insbesondere vorteilhafte Barriereeigenschaften gegenüber Sauerstoff und Wasserdampf. Eine weitere Aufgabe ist es, eine leicht und mit geringem Aufwand herstellbare BOPP-Folie bereitzustellen. Außerdem soll eine Folie bereitgestellt werden, die günstige Oberflächeneigenschaften aufweist. Die Folie soll insbesondere eine schnelle Verarbeitung begünstigen. Ebenso ist es eine Aufgabe der vorliegenden Erfindung eine Folie bereitzustellen, die eine verbesserte Haftung von Metall- oder Metalloxidschichten ermöglicht. Bevorzugt ist die BOPP-Folie preiswert herstellbar.

### Beschreibung der Erfindung

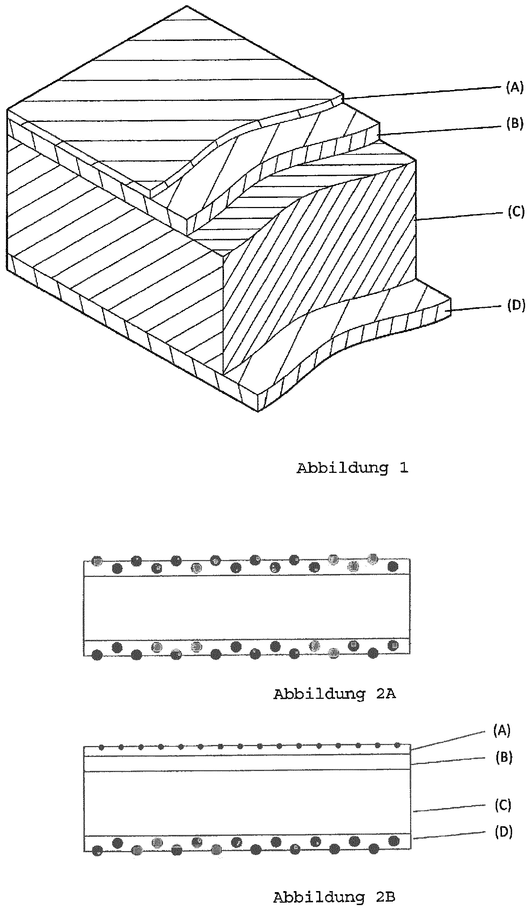

Ein Gegenstand der vorliegenden Erfindung ist eine Polypropylenfolie umfassend 4 Schichten (A) bis (D), die in der Reihenfolge von (A) bis (D) angeordnet sind (siehe Abbildungen 1 und 2B), worin Schichten (B) bis (D) biaxial orientiertes Polypropylen umfassen und worin
Schicht (A) Polyurethan und Nanopartikel umfasst und eine Schichtdicke von 25 bis 300 nm aufweist,
Schicht (B) Polymere mit funktionellen Gruppen umfasst, welche mit Polyurethan kovalente Bindungen ausbilden können und direkt mit Schicht (A) verbunden ist,
Schicht (C) wenigstens eine Schichtdicke von 50 % der Gesamtdicke der Folie aufweist und
Schicht (D) eine Außenschicht der Folie darstellt und Antiblockmittel umfasst.

Solche Folien weisen neben guten mechanischen Eigenschaften auch verbesserte Barriereeigenschaften und verbesserte Oberflächeneigenschaften auf. Insbesondere gehen sie mit auf Schicht (A) aufgebrachten Metall- oder Metalloxidschichten sehr feste Verbindungen ein. Soweit im Folgenden von Metallschichten die Rede ist, so sind stets auch Metalloxidschichten gemeint, soweit nichts anderes angegeben ist oder sich aus dem Zusammenhang nichts anderes ergibt.

Abbildungen 2A und 2B zeigen einen Vergleich zwischen einer herkömmlichen biaxial orientierten Polypropylenfolie mit einer Trageschicht in der Mitte und je einer Außenschicht (Skin-Layer) an beiden Oberflächen (Abbildung 2A) und der erfindungsgemäßen Folie (Abbildung 2B). In der herkömmlichen Folie gemäß Abbildung 2A ist die mittlere Schicht die Haupt- oder Trageschicht. Sie ist die Schicht, die der gesamten Folie ihre mechanischen und Barriereeigenschaften verleiht. Die beiden Außenschichten bestehen in der Regel aus ähnlichem Material wie die Trageschicht und enthalten zusätzlich Antiblockmittel (nicht dargestellt für die unterste Schicht). Antiblockmittel sind Mittel, die der Oberfläche der Folie eine erhöhte Rauheit verleihen. Beim Aufrollen der Folie verhindert diese Rauheit eine zu starke Adhäsion der Vorderseite und der Rückseite aneinander, was anschließend das Abwickeln erleichtert. In der Regel handelt es sich um Feststoffpartikel mit einer Größe im Mikrometer-Bereich, bevorzugt sind 1 bis 10 µm und besonders bevorzugt 1,5 bis 4 µm. Die Antiblockmittel werden in der Regel ausschließlich in die Außenschichten eingebracht, damit sie die Eigenschaften der Trageschicht nicht negativ beeinflussen.

In der erfindungsgemäßen Folie nach Abbildung 2B entsprechen Schichten (C) und (D) der Trageschicht und der unteren Außenschicht der herkömmlichen Folie. Schichten (A) und (B) ersetzen die obere Außenschicht. Das Material der Schicht (A) (Polyurethan) verleiht der erfindungsgemäßen Polypropylen-Folie verbesserte Barriereeigenschaften. Außerdem ist die Polyurethan-Oberfläche außerordentlich glatt (weist eine sehr geringe Oberflächenrauheit auf) und weist eine deutlich erhöhte Oberflächenspannung auf. Wenn darauf zusätzlich eine Metallschicht aufgebracht wird, um die Barriereeigenschaften weiter zu erhöhen, haftet diese daher außerordentlich fest an der Polyurethan-Oberfläche. Auch die Haftung der Schicht (A) an der Schicht (B) ist außerordentlich stark. Die Bedruckbarkeit der Schicht (A) ist ebenfalls hervorragend. Schicht (A) wirkt daher zusätzlich als Primer für die Metallisierung und das Bedrucken. Daher ist Schicht (A) eine Außenschicht der Folie, wenn die Folie nicht mit einer Metall oder Metalloxidschicht versehen ist.

Die Nanopartikel verleihen der Schicht (A) trotz großer Glätte genügend Oberflächenrauheit. Überraschender Weise führt die Substitution der Antiblockpartikel durch Nanopartikel dazu, dass die Barriereeigenschaften solcher Metallschichten verbessert werden. Dies dürfte zum einen daran liegen, dass die Oberflächenrauhigkeit geringer ist als bei herkömmlichen Folien, die Antiblockmittel in der Schicht an der Oberfläche der Folie aufweisen. So kann eine gleichmäßigere Beschichtung erhalten werden. Zum anderen verbessern sich aber auch die Barriereeigenschaften von aufgewickelten metallisierten Folien. Industriefolien werden in Form von Rollen gelagert und für die Weiterverarbeitung zur Verfügung gestellt. Beim Aufrollen kommen Ober- und Unterseite der Folie in Kontakt miteinander. So kommt bei einer einseitig mit Metall beschichteten Folie die Metallschicht in Kontakt mit der anderen Seite der Folie. Bei der herkömmlichen BOPP-Folie gemäß Abbildung 2A kommt die Metallschicht dabei im aufgewickelten Zustand von beiden Seiten direkt mit Antiblockmitteln in Berührung. An Stellen wo die großen Partikel der Antiblockmittel sich auf beiden Seiten der Folie direkt gegenüberstehen, wird an diesem Ort ein hoher Druck auf die Folie ausgeübt, was zu Löchern (z. B. Pinholes), Rissen und anderen Defekten in der Metallschicht führen kann und deren Barriereeigenschaften herabsetzt. Bei der erfindungsgemäßen Folie treffen die Partikel der Antiblockmittel auf die deutlich kleineren Nanopartikel. Dies setzt den lokal ausgeübten Druck herab und reduziert die Zahl der Defekte und insbesondere der Pinholes in der Metallschicht. Dieser Effekt tritt auch auf, wenn Schicht (D) keine Antiblockmittel umfasst. Auch in diesem Fall sind die Barriereeigenschaften verbessert, weil die kleineren Nanopartikel weniger Defekte an der Metall- oder Metalloxidbeschichtung erzeugen als herkömmliche Antiblockmittel.

Die hohe Glätte der Polyurethan-Oberfläche, ihre hohe Oberflächenspannung und auch das Polyurethanmaterial selbst bewirken beim Aufwickeln auf Rollen eine starke Haftung der Unter- und der Oberseite aneinander. Dies kann beim Abrollen bei den üblicherweise hohen Verarbeitungsgeschwindigkeiten zu Unregelmäßigkeiten im Bewegungsablauf führen, wodurch starke Kräfte auf die Folie wirken können. Dies kann zu einer Beschädigung der Barriereschichten führen. Die Nanopartikel bewirken jedoch die Bildung einer Luftschicht zwischen den Oberflächen und ermöglichen so das problemlose Abwickeln der Folien auch bei hoher Geschwindigkeit.

Der Ausdruck "Polypropylen" bezeichnet ein durch biaxiales Recken orientierbares oder bereits orientiertes Polypropylen. Es enthält isotaktisches Polypropylen. Bevorzugt weißt es einen hohen Grad an Isotaktizität auf. Die Isotaktizität liegt bevorzugt in einem Bereich von mehr als 70 %, besonders bevorzugt im Bereich von mehr als 85 % und am meisten bevorzugt im Bereich von 92 bis 96 %. Es handelt sich vorzugsweise um ein Polypropylen-Homopolymer. Es können jedoch auch andere für vergleichbare Zwecke verwendete Polypropylen-Typen verwendet werden, beispielsweise solche, die einen Anteil an copolymerisierten anderen Monomeren enthalten. In solchen Fällen sind im Polypropylen der vorliegenden Erfindung typischer Weise wenigstens 70 %, bevorzugt wenigstens 80 % und besonders bevorzugt wenigstens 90 % und ganz besonders bevorzugt wenigstens 95 % und am meisten bevorzugt wenigstens 98 % der Monomeren Propylen. So sind zum Beispiel Polymere geeignet, die neben Propylen bis zu 2 Gew.-% Monomere anderer alpha-Olefine enthalten. Ebenfalls geeignet sind Gemische (Blends) eines Polypropylen, insbesondere eines Polypropylen-Homopolymer mit anderen Polymeren. Diese anderen Polymeren können zum Beispiel ausgesucht sein aus der Gruppe bestehend aus Olefin-Polymeren, Olefin-Copolymeren oder Olefin-Terpolymeren. Bevorzugt sind darunter Ethylen-Propylen-Copolymere.

Bevorzugt ist der Anteil von Polypropylen-Homopolymer im Polypropylen in der vorliegenden Erfindung höher als 50 Gew.-%, besonders bevorzugt höher als 80 Gew.-%, ganz besonders bevorzugt höher als 90 % und am meisten bevorzugt höher als 95 %.

So weit nicht anders angegeben, ist es ferner bevorzugt, dass die Schichten (B) bis (D) jeweils wenigstens 35 Gew.-% Polypropylen, besonders bevorzugt wenigstens 50 Gew.-% Polypropylen, ganz besonders bevorzugt wenigstens 75 % Polypropylen und am meisten bevorzugt wenigstens 90 Gew.-% Polypropylen enthalten, jeweils bezogen auf die Gesamtmasse der Schicht. Die Schichten (B) bis (D) können jedoch auch nicht isotaktisches Polypropylen oder andere Polymere als Polypropylen umfassen, soweit die Schichten, beziehungsweise die Materialien zu Ihrer Herstellung, insgesamt noch orientierbar sind.

Das Gewichtsmittel des Molekulargewichts des Polypropylen liegt bevorzugt in einem Bereich von 150.000 g/mol bis 500.000 g/mol, besonders bevorzugt in einem Bereich von 200.000 g/mol bis 480.000 g/mol und ganz besonders bevorzugt in einem Bereich von 250.000 g/mol bis 450.000 g/mol.

Die Kristallinität des Polypropylens beträgt bevorzugt wenigstens 20 %, besonders bevorzugt wenigstens 25 % und ganz besonders bevorzugt wenigstens 45 %, jeweils gemessen durch dynamische Differenzkalorimetrie (DSC). Ebenfalls bevorzugt liegt die Kristallinität des Polypropylen im Bereich von 30 bis 70 % gemessen durch dynamische Differenzkalorimetrie (DSC).

Schichten (B) bis (D) der erfindungsgemäßen Folie formen eine biaxial orientierte Polypropylenfolie. Die Längsrichtung ist die Richtung in die die Folie ursprünglich extrudiert wurde ("Maschinenrichtung") und wird im Allgemeinen auch mit "MD" abgekürzt. Die Querrichtung steht senkrecht darauf und wird im Allgemeinen auch mit "TD" abgekürzt. Die Dicke ist die dritte Dimension. Biaxial orientierte Polypropylenfolien weisen ausgezeichnete mechanischen Eigenschaften und gute Barriereeigenschaften auf.

Die Dicke der erfindungsgemäßen Folie liegt üblicherweise in einem Bereich von 3 bis 50 µm, bevorzugt in einem Bereich von 5 bis 30 µm, besonders bevorzugt in einem Bereich von 5 bis 20 µm. Folien mit geringen Dicken sind preiswert und leicht. Ist die Dicke zu gering, so sind die mechanischen Eigenschaften und damit auch die Verarbeitbarkeit ungenügend. Ist sie zu hoch, so ist ebenfalls die Verarbeitbarkeit bei der Herstellung und Weiterverarbeitung unzureichend.

### Schicht (A)

Die erfindungsgemäße Folie ist dadurch gekennzeichnet, dass sie eine Polyurethanschicht, i.e. Schicht (A) aufweist. Die Polyurethan-Schicht (A) weist eine starke diffusionshemmende Wirkung auf, die zu einer deutlichen Verbesserung der Sauerstoff-Barriereeigenschaften und der Wasserdampf-Barriereeigenschaften der gesamten Folie beiträgt. Daneben dient Schicht (A) vor allem dazu eine gut haltbare Beschichtung der erfindungsgemäßen Folie mit Metallen und Metalloxiden zu ermöglichen.

Schicht (A) weist eine günstige und genau einstellbare Oberflächenrauheit auf, die einerseits durch die sehr glatte Oberfläche der Schicht (A) als auch durch die Nanopartikel in der Schicht (A) bedingt wird. Die sehr glatte Oberfläche der Schicht (A) ermöglicht eine sehr stark anhaftende Beschichtung für Metalle wie Aluminium oder für Metalloxide, wie Aluminiumoxid oder Siliciumdioxid. Wegen der geringen Größe der Nanopartikel behindern diese eine feste Bindung zwischen Metall- oder Metalloxidschicht (M) und der Schicht (A) nicht. Ferner verursachen die Nanopartikel weniger Defekte in der Metall- oder Metalloxidschicht. Andererseits vermitteln die Nanopartikeln der Oberfläche der Schicht (A) eine genügende Oberflächenrauheit und erzeugen so eine Reibung, die es erlaubt, die Folie im Herstellungsprozess durch Walzen effektiv zu transportieren und sich auf- und abwickeln lassen. Schicht (A) weist ferner eine sehr hohe und sehr homogen verteilte Oberflächenspannung auf und ist durch ihre chemische Beschaffenheit deutlich besser für eine anschließende Beschichtung mit Metallen oder Metalloxiden geeignet als Polypropylen-Schichten, was ebenfalls die Haftung von darauf aufgebrachten Metall- oder Metalloxidschichten (M) deutlich verbessert. Dies gilt insbesondere für die Metallschichten (M) aus Aluminium auf der Oberfläche der Schicht (A). Die Eindringtiefe von aufgedampften Aluminiumatomen ist im Vergleich zur nicht beschichteten Folie (ohne Schicht (A)) viel höher.

Des Weiteren ist eine dem Herstellungsprozess und insbesondere dem Reckprozess nachgeschaltete Oberflächenbehandlung (zum Beispiel Corona, Plasma- oder Flammbehandlung) nicht mehr notwendig. Diese Behandlung ist normalerweise zwingend für eine BOPP Folie mit einer Polypropylen-Außenschicht, um eine Beschichtung mit Metallen oder Metalloxiden zu ermöglichen. Dabei werden funktionelle Gruppen an der unpolaren Oberfläche des Polypropylens erzeugt, was die Oberflächenspannung erhöht und die Haftung verbessert. Meist geschieht das zwischen Recken und Aufwickeln der Folie. Der Effekt lässt nach einer gewissen Zeit nach und muss dann gegebenenfalls vor der Weiterverarbeitung erneuert werden. Das heißt, die Oberflächenspannung sinkt nach wenigen Wochen Lagerung unter einen Schwellenwert und muss erneuert werden. Dies ist bei der der erfindungsgemäßen Folie nicht notwendig, da die inline Beschichtung mit Polyurethan, im Vergleich zur normalerweise nachfolgenden Oberflächenbehandlung, bei welcher es sich zum Beispiel Corona, Plasma- oder Flammbehandlung handeln kann, für eine dauerhafte Erhöhung der Oberflächenspannung sorgt und nicht aufgefrischt werden muss. Dies stellt einen großen kommerziellen Vorteil der vorliegenden Folien dar, da sie dauerhaft lagerfähig sind. Dies ist nicht nur prozesstechnisch sehr positiv, sondern führt auch zu einer großen Zeitersparnis.

Schicht (A) weist eine Schichtdicke im Bereich von 25 bis 300 nm auf, bevorzugt liegt diese im Bereich von 50 bis 200 nm und besonders bevorzugt im Bereich von 50 bis 150 nm. Am meisten bevorzugt weist Schicht A eine Schichtdicke im Bereich von 100 bis 150 nm auf. Schicht (A) weist dabei bevorzugt eine Schichtdicke im Bereich von 0,1 bis 5 %, bevorzugt im Bereich von 0,2 bis 3 % und besonders bevorzugt im Bereich von 0,5 bis 1 % der Dicke der erfindungsgemäßen Folie auf. Polyurethan ist im Vergleich zu Polypropylen relativ teuer. Eine geringe Schichtdicke führt daher zu geringeren Kosten. Ist die Schicht allerdings geringer als hier angegeben, so wird die Bildung einer homogenen Schicht (A) auf dem Film erschwert. Außerdem verliert die Schicht (A) sukzessive ihre Barriereeigenschaften. Eine hohe Schichtdicke führt dagegen zu höheren Kosten, aber auch zu besseren Barriereeigenschaften. Sehr große Dicken können aber nicht mehr in einem Inline-Verfahren aufgetragen werden (siehe unten) und erhöhen die Kosten daher überproportional.

Als Material für das Polyurethan sind handelsübliche Polyurethan-Dispersionen geeignet. Besonders geeignet ist Takelac WPB 341. Es handelt sich um eine wässrige Dispersion der Firma Mitsui Chemicals mit 30 % Polyurethan-Gehalt. Schicht (A) kann grundsätzlich auch durch andere Verfahren aufgebracht werden, verliert dabei aber unter Umständen die Vorteile, dass sie dünn ist, eine sehr gleichmäßige Dicke aufweist und sehr glatt ist. Auch das Herstellen der Schicht durch Inline-Coating ist dann unter Umständen nicht mehr möglich. Dieses einfache Herstellungsverfahren stellt aber einen wesentlichen Vorteil der vorliegenden Erfindung dar (siehe unten)

Die Nanopartikel der Schicht (A) enthalten bevorzugt Nanopartikel aus amorphem Siliciumdioxid. Besonders bevorzugt enthalten die Nanopartikel solche aus kolloidalem Siliciumdioxid. Es sind jedoch auch andere Nanopartikel geeignet. Bevorzugt werden die Partikel in kolloidaler Form als Dispersionen eingesetzt. Nanopartikel, die in trockener Form dem Polyurethan zugesetzt werden, neigen eher als kolloidale Dispersionen zur Agglomeration und Sedimentation. Dies ist unerwünscht. Es werden bevorzugt sphärische Partikel verwendet. Die mittlere Teilchengröße der Nanopartikel der Schicht (A) bestimmt durch Laserbeugungs-Partikelgrößenanalyse ist bevorzugt nicht oder nur bis zu 20 % größer als die Dicke der Schicht (A). Größere Partikel, wie beispielsweise Antiblockpartikel würden zu weit aus der Schicht herausstehen und unter Umständen in einer etwaig aufgebrachte Metallschicht oder Metalloxidschicht (M) Defekte und insbesondere Pinholes verursachen, was die Barriereeigenschaften beeinträchtigen würde. Die mittlere Teilchengröße der Nanopartikel in der Schicht (A) liegt bevorzugt im Bereich von 20 bis 150 nm, besonders bevorzugt im Bereich von 50 bis 150 nm, ganz besonders bevorzugt im Bereich von 80 bis 150 nm. Bei zu kleinen Nanopartikeln haben diese keinen Effekt und die Folie wäre zu glatt. Eine Verarbeitung wäre nicht oder nicht in ausreichendem Maße möglich. Sind die Nanopartikel zu groß, so könnten die Nanopartikel über Schicht A hinausragen und so eine etwaige Beschichtung mit Metallen oder Metalloxiden beschädigen. Die Folien würden wasser- und luftdurchlässig.

Weiter weisen die Nanopartikel in der Schicht (A) bevorzugt eine spezifische BET-Oberfläche im Bereich von 10 bis 500 m²/g auf, besonders bevorzugt im Bereich von 10 bis 150 m²/g, ganz besonders bevorzugt im Bereich von 10 bis 100 m²/g und am meisten bevorzugt im Bereich von 20 bis 70 m²/g. Dies ermöglicht eine gute Anbindung der Nanopartikel an das Polyurethan. Nanopartikel des Typs Levasil 30/50 von Akzonobel sind besonders geeignet. Es handelt sich um eine Dispersion von kolloidalem Siliciumdioxid in Wasser.

Die Nanopartikel sind in der Schicht (A) bevorzugt in einer Menge im Bereich von 0,5 bis 20 Gew.-%, besonders bevorzugt im Bereich 1 bis 10 Gew.-% und ganz besonders bevorzugt im Bereich 2 bis 7 Gew.-% enthalten. Die Menge der Nanopartikel erlaubt es, die Oberflächenrauheit anzupassen. Dies führt zu einer besonders guten Haftung von Metallschichten oder Metalloxidschichten (M) auf der Schicht (A) und erleichtert das Auf- und Abwickeln der Folie von Rollen bei großen Verarbeitungsgeschwindigkeiten.

### Schicht (B)

Um die Anbindung der Polyurethanschicht (A) an die Folie zu verbessern, umfasst Schicht (B), bei der es sich um eine Art Haftschicht handelt, Polymere mit funktionellen Gruppen, welche mit Polyurethan kovalente Bindungen ausbilden können. Die funktionellen Gruppen wirken als Haftvermittler. Wenn Schicht B keine oder nicht genügend funktionelle Gruppen enthält, so bleibt Schicht A nicht auf Schicht B haften und die Folie wird instabil. Bei diesen Polymeren kann es sich um Polypropylen oder um andere Polymere handeln. In jedem Fall enthält Schicht (B) aber Polypropylen. Bevorzugt handelt es sich bei den Polymeren jedoch um Polyolefine. Die Polyolefine können zum Beispiel ausgesucht sein aus der Gruppe bestehend aus Polyethylen, Polypropylen, wobei letztere bevorzugt sind. Die Verwendung von Polypropylen führt dazu, dass Schichten (B), (C) und (D) ähnliche Eigenschaften bei der Verarbeitung aufweisen. Unter Polypropylen sind Polymere zu verstehen, die ausgesucht sind aus der Gruppe bestehend aus Propylenhomopolymeren, Propylencopolymeren und Propylenterpolymeren.

Das Polypropylen der Schicht (B) ist bevorzugt ein Propylen-Homopolymer, Propylen-Copolymer oder Propylen-Terpolymer. Diese können zusätzlich die funktionellen Gruppen aufweisen. Propylen-Copolymere und Propylen-Terpolymere zur Verwendung in der Schicht (B) enthalten bevorzugt mindestens 50 Gew.-% Propylen-Monomere, vorzugsweise im Bereich von 80-98 Gew.-%. Sie enthalten daneben bevorzugt Ethylen- und/oder Butylen-Monomere.

Die funktionellen Gruppen sind bevorzugt ausgesucht aus der Gruppe bestehend aus Carbonsäureanhydridgruppen, Epoxidgruppen, Carbonsäuregruppen und Carbonsäureestergruppen. Die Polymeren der Schicht (B) können auch mehrere verschiedener solcher funktioneller Gruppen umfassen, also zum Beispiel Carbonsäureanhydridgruppen und Carbonsäureestergruppen. Besonders bevorzugt enthalten die Polymeren der Schicht (B) Carbonsäureanhydridgruppen. Ganz besonders bevorzugt enthalten die Polymeren der Schicht (B) Maleinsäureanhydridgruppen. Am meisten bevorzugt umfasst Schicht (B) ein Maleinsäureanhydrid modifiziertes Polypropylen. Bevorzugt besteht die Schicht daraus. Insbesondere bevorzugt handelt es sich um ein Polypropylen mit aufgepfropften Maleinsäureanhydrid-Gruppen und am meisten bevorzugt um ein Polypropylen-Homopolymer mit aufgepfropften Maleinsäureanhydrid-Gruppen. Maleinsäureanhydrid-Gruppen führen zu besonders starken Bindungen zwischen Schicht (A) und Schicht (B). Es ist ebenfalls bevorzugt, dass Schicht (B) daneben keine weiteren Polymeren enthält. Eine große Menge an Polypropylen sorgt dafür, dass die Schicht ähnliche mechanische Eigenschaften und ähnliche Dehnungseigenschaften wie Schichten (C) und (D) aufweist. Eine große Menge an Maleinsäureanhydrid modifiziertem Polymer trägt besonders stark zur Bindung zwischen den Schichten (A) und (B) bei. Der Pfropfgrad des Polypropylen-Homopolymer mit aufgepfropften Maleinsäureanhydrid-Gruppen liegt bevorzugt in einem Bereich von 0,01 bis 1 %, besonders bevorzugt in einem Bereich von 0,1 bis 0,4 %.

Die Maleinsäureanhydrid-Gruppen können auch durch Copolymerisation von copolymerisierbaren Derivaten von Maleinsäureanhydrid, wie zum Beispiel 2-Vinyl-Maleinsäureanhydrid in das Polypropylen eingeführt werden. Schicht (B) kann auch Polymergemische (Blends) aus den vorstehend beschriebenen Polymeren und weiteren Polymeren umfassen.

Derartige modifizierte Polypropylene sind bekannt und werden beispielsweise von der Fa. Mitsui Chemicals unter dem Handelsnamen Admer® oder von Mitsubishi Chemicals unter dem Handelsnamen Modic® oder von Chemplex unter dem Handelsnamen Plexar®, sowie unter dem Handelsnamen Epilene® von Eastman und unter dem Handelsnamen Bynel® von DuPont vertrieben. Bevorzugt sind für die Zwecke der vorliegenden Erfindung Propylen-Homopolymere oder Propylen-Copolymere, die mit Maleinsäureanhydrid modifiziert sind (z.B. Produkte der Q-Serie der Firma Mitsui Chemicals), deren Schmelzindices im Bereich von 1 bis 10 g/10 min bei 230°C (ASTM D 1238) und deren Vicat Erweichungspunkte zwischen 110 und 155°C liegen (ASTM D 1525) . Die Herstellung solcher Polymeren wird in der der US 3,480,580 A, zum Beispiel in Beispielen 3, 4 und 6 beschrieben. Die aufgepfropften Maleinsäure-Anhydrid-Gruppen, erhöhen die Polarität auf der Oberfläche der Schicht (B) und ermöglichen eine chemische Verbindung zu den Bestandteilen der Polyurethanschicht (A).

Ganz besonders bevorzugt ist das Maleinsäureanhydrid modifizierte Polypropylen mit dem Handelsnamen ADMER™ AT3177E (erhältlich von Mitsui Chemicals GmbH, Deutschland). Durch die spezielle Zusammensetzung des Materials ist es an der Oberfläche einsetzbar und weist einen sehr hohen Glanz auf. Die hierbei entstehende Oberfläche der Schicht (B) ist durch die geringe Oberflächenrauheit und die erhöhte Oberflächenspannung sehr gut für die Beschichtung mit der Schicht (A) (insbesondere nach der MD-Verstreckung, siehe unten) geeignet und bewirkt eine ausreichende Haftung der Schicht (A) auf der Schicht (B) .

Es ist ebenfalls ganz besonders bevorzugt, dass Schicht (B) keine Antiblockmittel enthält. Antiblockmittel könnten die Oberflächenrauheit der Schicht (B) stark erhöhen und die Anbindung der Polyurethanschicht verschlechtern. Vor allem aber können solche Antiblockmittel Unebenheiten in der Oberfläche der sehr dünnen Schicht (A) bewirken, und so auch Defekte und insbesondere Pinholes in einer etwaig darauf aufgebrachten Metallschicht oder Metalloxidschicht verursachen. Die Barriereeigenschaften für Sauerstoff und/oder Wasserdampf können sich dadurch verschlechtern.

Die Dicke der Schicht (B) liegt im Allgemeinen im Bereich von 0,3-5 µm, vorzugsweise im Bereich von 0,3-3 µm, insbesondere im Bereich von 0,5 bis 2 µm. Es ist bevorzugt, das Schicht (B) höchstens eine Schichtdicke von 25 % und bevorzugt von höchstens 15 % der Dicke der Folie aufweist.

### Schicht (C)

Bei Schicht (C) handelt es sich um die Hauptschicht (auch Basisschicht oder Stützschicht genannt). Sie ist vor allem bestimmend für die mechanischen Eigenschaften der erfindungsgemäßen Folie. Durch die biaxiale Orientierung dieser Schicht und die Schichtdicke, trägt sie aber auch erheblich zu den Barriereeigenschaften und den optischen Eigenschaften bei.

Bevorzugt weist Schicht (C) wenigstens eine Schichtdicke von 50 %, bevorzugt von wenigstens 70 % und besonders bevorzugt von wenigstens 80 % der Dicke der Folie auf. Insbesondere liegt die Dicke der Schicht (C) bevorzugt im Bereich von 3 µm bis 45 µm, besonders bevorzugt im Bereich von 5 µm bis 28 µm und am meisten bevorzugt im Bereich von 7 µm bis 20 µm.

Solche Folien sind dem Fachmann hinlänglich bekannt. Bevorzugt umfasst Schicht (C) ein Polypropylen-Homopolymer. Es ist weiterhin bevorzugt, das Schicht (C) mehr als 50 Gew.-%, bevorzugt mehr als 80 Gew.-% und besonders bevorzugt mehr als 90 Gew.-% Polypropylen umfasst. Am meisten bevorzugt besteht sie aus Polypropylen-Homopolymer.

### Schicht (D)

Schicht (D) dient dazu, der der Schicht (A) abgewandten Seite der Folie eine günstige Oberflächenbeschaffenheit und insbesondere eine genügende Oberflächenrauheit zu vermitteln, damit die erfindungsgemäße Folie über Walzen transportiert und unter hohen Geschwindigkeiten von Rollen abgewickelt werden kann. Es handelt sich daher um eine übliche "Skin-layer" von Polypropylenfolien. Bevorzugt enthält Schicht (D) ein Polypropylen-Homopolymer. Die Schicht kann aber auch ein Polypropylen-Copolymer enthalten.

Die Menge des in Schicht (D) enthaltenen Antiblockmittels liegt im Allgemeinen im Bereich von 1 bis 10 Gew.-%, bevorzugt im Bereich von 1 bis 7 Gew.-% und besonders bevorzugt im Bereich von 1 bis 6 Gew.-%. Bei zu geringen Mengen ist die Oberfläche zu glatt und die Folie kann nicht gut verarbeitet, und insbesondere nicht gut auf- und wieder abgewickelt werden. Ist die Menge zu groß, stehen zu viele Partikel aus der Oberfläche der Folie heraus. Wird eine auf der gegenüberliegenden Seite mit Metall beschichtete Folie dann aufgewickelt, kommen diese Partikel in Berührung mit der Metallschicht. Sie können sich dann in die Metallschicht (oder Metalloxidschicht) drücken und Defekte und insbesondere Pinholes verursachen, die die Barriereeigenschaften herabsetzen. Es sollte daher eine Menge eingesetzt werden, die so gering wie möglich ist, aber die Verarbeitung noch ermöglicht. Eine geeignete Menge kann für jede Folie leicht durch Vorversuche ermittelt werden. Es können alle bekannten Antiblockmittel eingesetzt werden.

Die erfindungsgemäße Folie kann weitere Schichten aufweisen, die zwischen der Schicht (C) und den Schichten (B) und (D) liegen können.

Außerdem können alle Schichten, je nach dem beabsichtigten Verwendungszweck der Folie, verschiedene übliche Zusätze enthalten, die beispielsweise ausgesucht sein können aus der Gruppe bestehend aus mineralischen oder organischen Zusätzen zur Bildung von Mikrohohlräumen, Füllstoffe, Absorptionsmittel, UV und Licht-Schutzmittel, Farbstoffe und deckende Pigmente.

Zur Verwendung in oder als Lebensmittelverpackungen werden Polypropylenfolien häufig zumindest auf einer Seite mit einer Metallschicht oder Metalloxidschicht versehen. Ebenfalls ein Gegenstand der vorliegenden Erfindung ist daher eine erfindungsgemäße Folie die eine Metallschicht oder eine Metalloxidschicht aufweist, die direkt mit der Oberfläche von Schicht (A) verbunden ist. Solche Folien können direkt für Lebensmittelverpackungen eingesetzt werden.

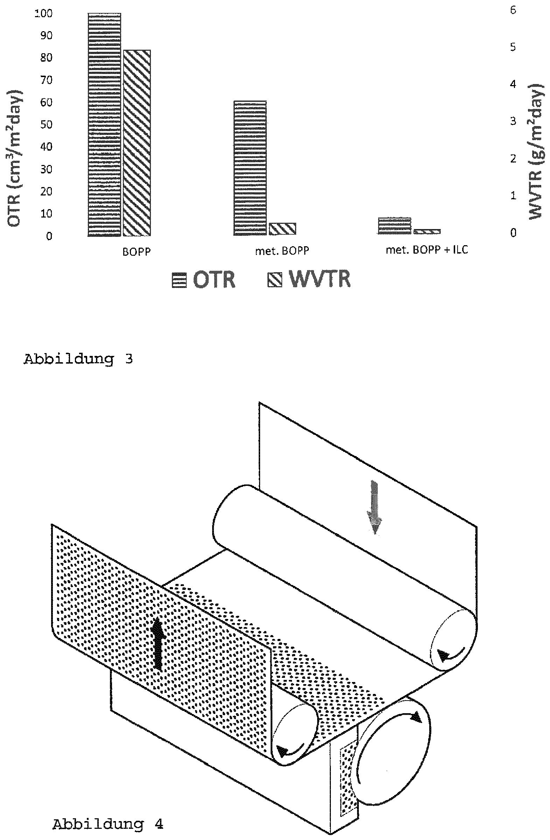

Eine handelsübliche BOPP Folie mit einer Dicke von 18 µm, die lediglich die Schichten (B), (C) und (D) in dieser Reihenfolge aufweist, hat eine Durchlässigkeit für Sauerstoff ("oxygen transmission rate", OTR) von ca. 1500 cm³/m^{2∗}d. Durch eine standartmäßige Metallisierung lässt sich dieser Wert auf etwa 60 - 80 cm³/m^{2∗}d^{∗}bar reduzieren. Im Vergleich zu solchen "Benchmark-Folien" lässt sich OTR-Wert der metallisierten erfindungsgemäßen Folie durch die erfindungsgemäßen Maßnahmen kostengünstig auf 6 - 7 cm³/m^{2∗}d reduzieren (siehe auch Tabelle 1 und Abbildung 3). D.h. der Einsatz eines nur 100 nm dicken Überzugs (Schicht (A)) reduziert die Sauerstoffdurchlässigkeit der erfindungsgemäßen BOPP Folien um etwa den Faktor 10 im Vergleich zu aktuell erhältlichen BOPP Folien. Die vorliegende Erfindung schließt damit eine Lücke zwischen einer üblichen metallisierten BOPP Folie mit schlechteren Barriereeigenschaften und den sehr teuren und aufwändig hergestellten "Ultra High Barrier" Folien, die Werte von 0,3 cm³/m^{2∗}d oder weniger erreichen, aber sehr teuer sind. Das gleiche gilt bei der Durchlässigkeit für Wasserdampf ("water vapor transmission rate").

Bevorzugt sind erfindungsgemäße Folien, die eine Sauerstoffdurchlässigkeit im Bereich von 1 bis 10 cm³/m^{2∗}d aufweisen. Ferner sind erfindungsgemäße Folien bevorzugt, die eine Durchlässigkeit für Wasserdampf von 0,1 bis 0,5 g/m²d aufweisen.

Verfahren zum Metallisieren von Kunststofffolien sind dem Fachmann bekannt. Sie können prinzipiell durch Vakuum-Metallisierung, indirekte Metallisierung, zum Beispiel durch Heißfolienprägung, Plattieren und Lackieren erfolgen. Bevorzugt ist die Vakuum-Metallisierung, da sie keine besonderen Eigenschaften oder Vorbereitungen der Folien erfordert und keine oder fast keine Hilfsstoffe benötigt. Die Vakuum-Metallisierung kann entweder durch Standard-Vakuum Metallisierung (Physical Vapor Deposition) oder durch Sputtern (Plasma Enhanced Chemical Vapor Deposition, PE-CVD) durchgeführt werden. Bei der Verwendung von Aluminium wird vorteilhaft die Standard-Vakuum Metallisierung angewendet. Metalloxidschichten können ebenfalls mit bekannten Verfahren aufgebracht werden. Soweit die erfindungsgemäße Folie eine Metalloxidschicht aufweist, handelt es sich bevorzugt um eine Aluminiumoxidschicht oder um eine Siliziumdioxidschicht, die direkt mit der Oberfläche von Schicht (A) verbunden ist. Die Dicke der Schichten unterscheiden sich je nach Material. Für Aluminiumschichten sind Schichtdicken im Bereich von 30 bis 80 nm bevorzugt. Für Siliciumoxidschichten sind Schichtdicken von 30 bis 80 nm bevorzugt und für Aluminiumoxidschichten 5 bis 20 nm.

Ein weiterer Aspekt der vorliegenden Erfindung ist eine Lebensmittelverpackung umfassend eine erfindungsgemäße Folie.

Ein weiterer Aspekt der vorliegenden Erfindung ist ein Verfahren zur Herstellung einer erfindungsgemäßen Folie, umfassend die Schritte:
- Bereitstellen eines Films, der monoaxial in Längsrichtung verstreckt ist, Schichten (B) bis (D), mit einer Zusammensetzung wie vorstehend beschrieben, umfasst und worin Schichten (B) und (D) Außenschichten des Films sind,
- Aufbringen einer Schicht einer flüssigen Dispersion enthaltend Polyurethan und Nanopartikel auf Schicht (B),
- Trocknen der flüssigen Dispersion unter Herstellung der Schicht (A),
- Recken des Films in Querrichtung unter Herstellung einer biaxial orientierten Folie.

Dieses Verfahren umfasst daher ein sequenzielles Recken. Bevorzugt umfasst dieses Verfahren zur Herstellung einer erfindungsgemäßen Folie, die Schritte:
- Bereitstellen wenigstens der Polymeren für die Schichten (B), (C) und (D), mit einer Zusammensetzung wie vorstehend beschrieben, mit allen Inhaltsstoffen,
- Schmelzen der einzelnen Polymeren,
- Extrudieren der Polymeren aus einer Breitschlitzdüse unter Herstellung eines Films mit wenigstens drei Lagen entsprechend den Schichten (B), (C) und (D), wobei Schichten (B) und (D) Außenschichten des Films sind,
- Kühlen des so entstandenen Films auf einer Kühlrolle unter Herstellung eines Films mit den Schichten (B), (C) und (D),
- Recken des Films in Längsrichtung,
- Aufbringen einer homogenen Schicht einer flüssigen Dispersion enthaltend wenigstens Polyurethan und Nanopartikel auf die Schicht (B)
- Trocknen der flüssigen Dispersion durch Erwärmen unter Herstellung der Schicht (A),
- Recken des Films in Querrichtung unter Herstellung einer biaxial orientierten Folie.

In diesem Verfahren sind die Polymere die bereitgestellt werden in der Regel nicht orientiert.

In einem herkömmlichen Verfahren zur Herstellung von biaxial orientierten Polypropylenfolien wird ein Polypropylen-Ausgangsmaterial bereitstellt, dieses aufgeschmolzen und aus der Schmelze durch Extrusion und Abkühlen der Schmelze ein Castfilm (Primärfilm) herstellt. Dann wird der Castfilm durch Wiedererwärmen auf Recktemperatur gebracht und biaxial in Maschinenrichtung (MD) und Querrichtung (TD) gereckt und zwar entweder sequentiell oder simultan und die gereckte biaxial orientierte Polypropylenfolie wird nach dem Abkühlen aufgewickelt. Beim sequenziellen Recken wird der Castfilm zunächst in Maschinenrichtung (MD) und dann in Querrichtung (TD) gereckt. Beim simultanen Recken wird der Castfilm gleichzeitig in beiden Richtungen gereckt.

In der vorliegenden Beschreibung werden biaxial orientierte Polypropylen-Folien als Folien bezeichnet, während nicht oder monoaxial orientierte Polypropylen-Filme als Filme bezeichnet werden. Dies wird jedoch nicht strikt befolgt. Die Begriffe Film und Folie sind im Sinne der vorliegenden Erfindung als Synonyme zu verstehen, die beide bei der Beschreibung der Erfindung auswechselbar verwendet werden.

Im Vergleich zum herkömmlichen Herstellungsverfahren wird hier zusätzlich Schicht (A) aufgebracht. Das Aufbringen des Polyurethans in Form einer Dispersion auf den Film nach dem Recken in Längsrichtung, aber vor dem Recken in Querrichtung führt zu einem sehr einfachen Verfahren, dass gegenüber dem Herstellungsprozess für herkömmliche Folien kaum Mehraufwand mit sich bringt. Es muss kein zusätzlicher Extruder für die Polyurethanschicht eingesetzt werden. Da Filme zum Recken bis in die Nähe ihres Erweichungspunktes erwärmt werden, kann die Entfernung des Lösungsmittels automatisch durch Verdampfen erfolgen, wenn der Film zum Recken in Querrichtung erwärmt wird. Da Schicht (A) sehr dünn ist, ist die Zeitdauer, die für das Verdampfen des Lösungsmittels benötigt wird, sehr gering. Gleichzeitig werden die Nanopartikel als Inhaltstoffe einer flüssigen Dispersion durch die Flüssigkeit gleichmäßig über die Oberfläche der Schicht (A) verteilt. Das Aufbringen der Polyurethanschicht kann daher inline durch Beschichten erfolgen und der Aufwand ist sehr gering.

Die Polyurethandispersion kann aber auch vor einen Reckvorgang in Längsrichtung aufgebracht werden, wie in den folgenden ebenfalls erfindungsgemäßen Verfahren beschrieben sind:
Verfahren zur Herstellung einer erfindungsgemäßen Folie, umfassend die Schritte:
- Bereitstellen eines Films umfassend Schichten (B) bis (D) mit einer Zusammensetzung wie vorstehend beschrieben, in der die Schichten (B) bis (D) nicht orientiert sind (Primärfilm) und Schichten (B) und (D) Außenschichten des Films sind,
- Aufbringen einer flüssigen Dispersion enthaltend Polyurethan und Nanopartikel auf die Schicht (B),
- Trocknen der flüssigen Dispersion durch Erwärmen unter Herstellung der Schicht (A),
- Simultanes Recken des Films in Längsrichtung und in Querrichtung unter Herstellung einer biaxial orientierten Folie.

Bevorzugt ist das vorstehende Verfahren zur Herstellung einer erfindungsgemäßen Folie, umfassend die Schritte:
- Bereitstellen wenigstens der Polymeren für die Schichten (B), (C) und (D), mit einer Zusammensetzung wie vorstehend beschrieben, mit allen Inhaltsstoffen,
- Schmelzen der einzelnen Polymeren,
- Extrudieren der Polymeren aus einer Breitschlitzdüse unter Herstellung eines Films mit wenigstens drei Schichten entsprechend den Schichten (B), (C) und (D), wobei Schichten (B) und (D) Außenschichten sind,
- Kühlen des so entstandenen Films auf einer Kühlrolle unter Herstellung eines Films mit den Schichten (B), (C) und (D),
- Aufbringen einer flüssigen Dispersion enthaltend wenigstens ein Polyurethan und Nanopartikel auf die Schicht (B),
- Trocknen der flüssigen Dispersion durch Erwärmen unter Herstellung der Schicht (A),
- Simultanes Recken des Films in Längsrichtung und in Querrichtung unter Herstellung einer biaxial orientierten Folie.

In diesem Verfahren sind die Polymere die bereitgestellt werden in der Regel nicht orientiert. Zum Schmelzen und extrudieren der Polymeren können jeweils zum Beispiel Einschneckenextruder oder Doppelschneckenextruder verwendet werden.

In einer dritten Version des erfindungsgemäßen Verfahrens wird eine Kombination der vorstehenden erfindungsgemäßen Verfahren verwendet. Dabei wird der Film zunächst in Längsrichtung gereckt, dann die flüssige Dispersion aufgetragen und dann noch einmal simultan gereckt.

Bevorzugt ist jedoch das zuerst angegebene Verfahren, bei dem sequenzielles Recken angewendet wird, da dabei weniger flüssige Dispersion aufgetragen werden muss, als wenn simultan gereckt wird. Das beschleunigt das Verfahren und senkt die Kosten.

Die Dispersion enthält neben den Nanopartikeln und dem Polyurethan noch ein Lösungsmittel. Bevorzugt enthält die flüssige Dispersion 0,5 bis 20 Gew.-%, bevorzugt 1 bis 10 Gew.-% und besonders bevorzugt 2 bis 7 Gew.-% Nanopartikel, bezogen auf die Trockenmasse der flüssigen Dispersion. Die Trockenmasse wird dabei dadurch bestimmt, dass die flüssige Dispersion bei 130 °C bis zur Gewichtskonstanz getrocknet wird. Der Rückstand stellt dann die Trockenmasse dar. Die in diesem Verfahren für die flüssige Dispersion verwendeten Lösungsmittel weisen daher bevorzugt einen Siedepunkt von 140 °C oder weniger, besonders bevorzugt von 130 °C oder weniger und ganz besonders bevorzugt von 120 °C oder weniger auf.

Die flüssige Dispersion enthält typischerweise 80 bis 99,5 Gew.-%, bevorzugt 90 bis 99 Gew.-% und besonders bevorzugt 93 bis 96 Gew.-% Polyurethan, bezogen auf die Trockenmasse der flüssigen Dispersion. Die Trockenmasse enthält dabei neben Polyurethan zumindest noch die Nanopartikel und kann daneben weitere Hilfsstoffe enthalten. Weiterhin enthält die flüssige Dispersion typischerweise 5 bis 25 Gew.-%, bevorzugt 10 bis 20 Gew.-% und besonders bevorzugt 12 bis 18 Gew.-% Trockenmasse. Bevorzugt ist die flüssige Dispersion eine wässrige Dispersion. Besonders bevorzugt ist Wasser das einzige verwendete Lösungsmittel der flüssigen Dispersion. Zusätzlich kann die Dispersion Vernetzungsmittel enthalten. Die Vernetzungsmittel können in Mengen von bis zu 3 Gew.-%, bevorzugt bis zu 1 Gew.-% der Trockenmasse der Dispersion ausmachen. Bei dem Vernetzungsmittel handelt es sich bevorzugt um ein polyfunktionales Aziridin-Vernetzungsmittel.

Als Polyurethan kommt bevorzugt die Polyurethan-Dispersion Takelac WPB-341 von Mitsui Chemical zum Einsatz. Es ist ein speziell modifiziertes Polyurethan, das im Gegensatz zu konventionellen Polyurethanen eine deutlich erhöhte Sauerstoffbarriere aufweist. Bisher wurde das Material nur im "Offline-Coating" Sektor verwendet um Gasbarrieren von Solarzellen oder speziellen Verpackungen zu erhöhen. Für den Inline Prozess mit anschließender Verstreckung wurde das Material zuvor noch nie verwendet. Es ist weiter bevorzugt, dass Nanopartikel Levasil 30/50 der Firma Akzonobel in einer Menge von 3 bis 5 % zugesetzt werden.

Bevorzugt ist ein erfindungsgemäßes Verfahren in dem das Trocknen der flüssigen Dispersion gleichzeitig mit dem Verstrecken des Films in Querrichtung erfolgt oder in dem das Trocknen der flüssigen Dispersion gleichzeitig mit dem Vorheizen der Filme für das simultane Verstrecken der Filme in Längs- und Querrichtung erfolgt. Zum Recken werden Polypropylen-Filme üblicherweise in der Vorheizzone des Reckofens auf 120 °C oder mehr erwärmt, um den Film auf Strecktemperatur zu bringen, um ihre Dehnbarkeit zu erhöhen. Durch das Erwärmen des Films in der Vorheizzone kann gleichzeitig die darauf befindliche Dispersion getrocknet werden, wodurch sich Schicht (A) bildet. Ein zusätzlicher Verfahrensschritt zum Trocknen der Dispersion erübrigt sich daher.

Das Auftragen der flüssigen Dispersion auf die Schicht (B) erfolgt bevorzugt im Reverse Gravur Kiss Coating Verfahren und besonders bevorzugt durch einen "reverse gravure coater" mittels "kiss coating". In Abbildung 4 wird schematisch gezeigt, wie dieses Verfahren durchgeführt wird. Der Film wird durch zwei Führungsrollen über die Gravurwalze geführt, die sich entgegen der Bewegungsrichtung des Films dreht. Die Druckerwalze wird durch ein Reservoir mit der wässrigen Dispersion (gepunktet) beladen. Dieses Verfahren erlaubt das gleichmäßige Auftragen der flüssigen Dispersion bei sehr hohen Verarbeitungsgeschwindigkeiten. Dabei beträgt der Feststoffanteil der flüssigen Dispersion bevorzugt 5 bis 20 Gew.-%, besonders bevorzugt 10 bis 20 Gew.-% und idealerweise 15 Gew.-%, jeweils bezogen auf die Gesamtmasse der flüssigen Dispersion. Die durch die flüssige Dispersion auf Schicht (B) gebildete Nassschicht hat bevorzugt eine Masse von 3 bis 20 g/m² und besonders bevorzugt 6 bis 10 g/m². Ganz besonders bevorzugt beträgt der Feststoffanteil der flüssigen Dispersion 10 bis 20 Gew.-% und die gebildete daraus gebildete Nassschicht hat eine Masse von 6 bis 10 g/m². Beim Aufbringen der flüssigen Dispersion weist die flüssige Dispersion bevorzugt eine Temperatur von nicht mehr als 100°C, bevorzugt von nicht mehr als 70°C und besonders bevorzugt von nicht mehr als 40°C auf. Gleiches gilt bevorzugt für die Folie. Bei hohen Temperaturen kann die Flüssigkeit kochen und/oder die Inhaltsstoffe können sich zersetzen. Üblicherweise werden Druckvorgänge bei Raumtemperatur durchgeführt und die Einhaltung dieser Temperatur sollte kein Problem darstellen. Sollte die Folie jedoch direkt anschließend an die Herstellung mit der Schicht A versehen werden, so muss darauf geachtet werden, dass sie vor dem Aufbringen der Schicht A genügend gekühlt wird.

Es ist weiter bevorzugt, dass die Oberfläche der Schicht (B) vor dem Aufbringen der flüssigen Dispersion einer Oberflächenbehandlung unterzogen wird. Bei dieser Oberflächenbehandlung handelt es sich bevorzugt um eine Oberflächenbehandlung ausgesucht aus der Gruppe bestehend aus Corona-Behandlung, Plasmabehandlung und Flammbehandlung. Am meisten bevorzugt ist eine Corona-Behandlung. Eine solche Oberflächenbehandlung der Schicht (B) verbessert die Haftung der Schichten (A) und (B) aneinander. Da der Kristallisationsgrad des Films vor dem Recken in Querrichtung noch relativ gering ist, ist die Vorbehandlung mittels Corona-Behandlung, Plasmabehandlung und Flammbehandlung effektiver als bei herkömmlichen Filmen, die nach dem Querrecken behandelt werden. Auch die Menge der Polyurethan-Dispersion ist bei dem Aufbringen vor dem Querrecken um ein vielfaches geringer. So beträgt bei einer Filmbreite von 1,5 m nach dem Längsrecken die Folienbreite nach den Querrecken typischerweise 8-11 m. Es müsste daher eine viel größere Menge an flüssiger Dispersion aufgetragen werden, um eine gleichmäßige Beschichtung zu erzielen.

Bevorzugt ist ebenfalls ein erfindungsgemäßes Verfahren, dadurch gekennzeichnet, dass die Kühlwalze eine Temperatur im Bereich von 20 bis 40°C aufweist. Zum Querrecken wird bevorzugt ein üblicher Reckofen verwendet, der zumindest eine Vorheizzone aufweist. Im vorliegenden Verfahren muss die Vorheiztemperatur in der Vorheizzone des Reckofens so eingestellt werden, dass die Polyurethandispersion im Wesentlichen trocknet, bevor das eigentliche Recken beginnt. Hierzu muss gegebenenfalls die Vorheiztemperatur höher eingestellt werden als dies üblicherweise der Fall ist. Bevorzugt ist die Vorheiztemperatur um 2 bis 15 °C und besonders bevorzugt um 3 bis 10 °C höher. Wenn die flüssige Dispersion vor dem Recken nicht genügend getrocknet ist, kann die Schicht (A) Defekte und insbesondere Pinholes aufweisen. Wenn die Oberflächenspannung über die gesamt Oberfläche der Schicht (A) gleichmäßig hoch ist, liegt eine homogene Beschichtung vor. Entsprechend können auch die Sauerstoffdurchlässigkeit oder die Wasserdampfdurchlässigkeit als Maß für die genügende Trocknung verwendet werden. Führt eine längere Trocknung oder eine Trocknung bei höherer Temperatur nicht mehr zu einer Verbesserung diese Werte, so ist für diesen Film und dieses Herstellungsverfahren die Trocknungstemperatur ausreichend.

Weiterhin ist es bevorzugt, dass das Reckverhältnis beim sequenziellen Recken in Längsrichtung im Bereich von 2 bis 8, bevorzugt im Bereich von 3 bis 7 und besonders bevorzugt im Bereich von 4 bis 6 liegt. Das Reckverhältnis in Querrichtung liegt beim sequenziellen Recken bevorzugt im Bereich von 4 bis 14, besonders bevorzugt im Bereich von 6 bis 10 und ganz besonders bevorzugt im Bereich von 8 bis 10. Im Verfahren mit simultanen Recken beträgt die Reckrate bevorzugt 35 bis 60, besonders bevorzugt 40 bis 55 und ganz besonders bevorzugt 45 bis 50. Ebenfalls vorteilhaft ist es, wenn das Anlegen der Schmelze auf die Kühlwalze durch ein sogenanntes Air-Knife unterstützt wird.

An der Folie kann weiter nach dem Recken eine Relaxierung in Längsrichtung oder in Querrichtung oder in beiden Richtungen vorgenommen werden.

Kurze Beschreibung der Zeichnungen:
- Abbildung 1:: Abbildung 1 gibt den Aufbau der erfindungsgemäßen Folien mit Schichten (A) bis (D) wieder.
- Abbildung 2A:: Abbildung 2A gibt den Aufbau einer herkömmlichen Polypropylenfolie wieder mit einer Trageschicht und zwei Außenschichten (Skin-Layer), von denen eine Antiblockmittel enthält.
- Abbildung 2B:: Abbildung 2B gibt den Aufbau einer erfindungsgemäßen Folie wieder, mit der zusätzlichen Schicht (A), die Nanopartikel enthält. Die Partikel in den Schichten sind kenntlich gemacht.
- Abbildung 3:: Abbildung 3 zeigt einen Vergleich der Sauerstoff- und der WasserdampfBarriereeigenschaften von herkömmlichen Polypropylenfolien (BOPP), metallisierten BOPP Folien (met. BOPP) und erfindungsgemäßen Folien mit inline erzeugter Polyurethan-Beschichtung und offline erzeugter Metallschicht mit besonders guten Barriereeigenschaften (met. BOPP + ILC) wieder. Die ganz linke Säule ist verkürzt dargestellt (siehe Tabelle 1).
- Abbildung 4:: Abbildung 4 zeigt eine schematische Darstellung eines Reverse Gravur Kiss coating Prozesses, wie er im vorliegenden Verfahren verwendet wird. Die gepunkteten Bereiche auf der Folie zeigen den einseitig beschichteten Teil der Folie. Ferner ist die flüssige Dispersion in dem Reservoir gepunktet wiedergegeben.
- Abbildung 5:: Querschnitt durch die erfindungsgemäße Folie gemäß Beispiel 2.

### Beispiele:

### Materialien:

Takelac WPB 341 ist eine wässrige Dispersion der Firma Mitsui Chemicals mit 30 % Polyurethan-Gehalt. Levasil 30/50 ist eine wässrige Dispersion von kolloidalem Siliciumdioxid der Firma Akzonobel mit einem Gehalt an kolloidalem Siliciumdioxid von 50 Gew.-% (Teilchengröße 80-100 nm; spez. Oberfläche 35 m²/g; BET-Oberfläche: 40 m²/g). Admer AT 3177E ist ein Polypropylen-Homopolymer mit aufgepfropften Maleinsäureanhydrid-Gruppen mit einer Vicat Erweichungstemperatur von 135 °C (D1525). Moplen HP522 ist ein isotaktisches Polypropylen-Homopolymer "Moplen®" HP 522 H der Firma Basell mit einer Vicat Erweichungstemperatur von 155 °C (ISO 306). Adsyl 3C30F ist ein isotaktisches Polypropylen-Homopolymer der Firma Basell mit einer Vicat Erweichungstemperatur von 122 °C (ISO 306). POLYBATCH® ABVT22SC ist ein Antiblockmittel der Firma Polybatch.

Die Messung von Teilchengrößen erfolgt bevorzugt durch Laserbeugungs-Partikelgrößenanalyse.

### Beispiel 1:

Zur Herstellung einer erfindungsgemäßen Folie wird Adsyl 3C30F und 5 Gew.-% POLYBATCH® ABVT22SC bezogen auf das Gewicht der Mischung gemischt. Admer AT 3177E für die Schicht (B), Moplen HP522 für die Schicht (C) und die vorstehend genannte Mischung für die Schicht (D) getrennt in je einem Extruder bei 240 bis 265 °C geschmolzen und mittels einer Breitschlitzdüse extrudiert. Schicht C wird mit einem Doppelschneckenextruder extrudiert, Schichten (B) und (D) werden ebenfalls jeweils mit Doppelschneckenextruder extrudiert. Die durch die Breitschlitzdüse extrudierte Schmelze wird mit Hilfe einer Kühlrolle abgekühlt und so einen Castfilm erhalten. Dieser Castfilm wird bei einer Film-Geschwindigkeit von 10 m/min in einer Reckanlage in Längsrichtung mit einem Reckverhältnis von 5 gereckt. Dabei haben die Vorheizwalzen Temperaturen im Bereich von 80 bis 104 °C, die Streckwalzen Temperaturen im Bereich von 95 bis 105 °C und die Annealingwalzen Temperaturen im Bereich von 95 bis 100 °C. Nach den Recken in Längsrichtung weist der Film eine Geschwindigkeit von 50 m/min auf. Nach dem Abkühlen des so entstandenen monoaxial orientierten Films (MOPP Film), wird die Oberfläche der Schicht (B) des Films zunächst einer üblichen Corona-Behandlung unterzogen. Dadurch wird die Benetzung der Filmoberfläche durch das Polyurethan verbessert.

Anschließend wird auf die Schicht (B) eine wässrige Polyurethan-Dispersion als Beschichtungs-Material mittels "Reverse Gravur Kiss Coating" mit Hilfe eines "reverse gravure coaters", auf den MOPP Film aufgetragen. Hierzu werden gravierte Walzen verwendet die Vertiefungen aufweisen, die bei jeder Umdrehung mit der Dispersion gefüllt werden. Die Temperaturen des Films und der Polyurethan-Dispersion sind dabei geringer als 100°C. Beim Kontakt mit der Filmbahn wird ein Teil der Flüssigkeit auf den Film übertragen. Durch eine gegenläufige Rotation der Walze gegen die Bewegungsrichtung des Films entsteht ein gleichmäßiger Benetzungsbereich auf der Filmbahn. Zum Einsatz kommt hierbei eine 12 g/m² Gravurwalze, die eine Nassschicht mit 12 g wässriger Dispersion pro Quadratmeter Filmoberfläche erzeugt. Die zur Beschichtung verwendete Dispersion besteht aus 48 Gew.-% Takelac WPB 341, 1,2 Gew.-% Levasil 30/50 und 50,8 Gew.-% Wasser, jeweils bezogen auf die Gesamtmasse der Dispersion.

Anschließend wird der Film in einem Reckofen in Querrichtung mit einem Reckverhältnis von 9 gereckt, wobei die Vorheizzone eine Temperatur im Bereich von 175 bis 190 °C aufweist und so bei dem Vorheizen im Reckofen die wässrige Polyurethan-Dispersion vor dem Recken unter Bildung einer Polyurethan-Schicht (A) getrocknet wird. Die Streckzonen weisen Temperaturen von 160 bis 170 °C auf und die Annealingzone weist eine Temperatur im Bereich von 160 bis 168 °C auf. Bei allen hier angegebenen Temperaturen handelt es sich um die Temperatur der Luft in den entsprechenden Zonen des Reckofens. Anschließend wird die Folie in einem weiteren Offline-Verfahren metallisiert. Als Metall wird Aluminium verwendet, welches durch Standard-Vakuum Metallisierung (PVD) aufgetragen wird. Die Schichtdicke beträgt 45 nm und die optische Dichte der Schicht 2,7.

Es wird eine Folie mit den folgenden Eigenschaften erhalten:
Schichtdicken: Gesamtfolie 18,1 µm (nach DIN 53370), Schicht (A) 100 nm, Schichten (B) und (D) 1 µm, Schicht (C) 16 µm, Metallschicht (M) 45 nm; Zerreißfestigkeit (ASTM D 882) MD: 157 N/mm², TD: 291 N/mm²; Bruchdehnung (ASTM D 882) MD: 250 %, TD: 69 %; Elastizitätsmodul (ASTM D 882) MD: 1231 N/mm², TD: 2475 N/mm²; Reibungskoeffizient (DIN EN ISO 8295, U/U) MD: 0,58 µS, TD: 0,53 µk; Wärmeschrumpf (BMS TT 0,2; 120 °C/5 min) MD: 4 %, TD 0,8 %; Sauerstoffdurchlässigkeit (ISO 15105-2) <7 cm³/(m²dbar) (bei 23°C und 0% relative Luftfeuchtigkeit); Wasserdurchlässigkeit (ASTM E 96) 0,1 g/(m²d) (bei 38°C und 90% relative Luftfeuchtigkeit); Metallhaftung (Klebebandtest, TP-104-87) 5/5, (EAA sealing, AIMCAL Prozess TP-105-92 für die Adhäsion von metallisierten Filmen, N/15mm) >3, kein Ablösen des Metalls.

Wie man diesen Werten entnehmen kann, sind die mechanischen Eigenschaften der erfindungsgemäßen Folien ähnlich denen der handelsüblichen Barrierefolien. Die Sauerstoffdurchlässigkeit und die Wasserdampfdurchlässigkeit sind jedoch stark reduziert. Dies führt bei der Verwendung zu einer verlängerten Haltbarkeit von damit verpackten Lebensmitteln.

Abbildung 3 zeigt die Sauerstoffdurchlässigkeit ("OTR", "oxygen transmission rate") und die Durchlässigkeit für Wasserdampf ("WVTR", "water vapor transmission rate") für eine metallisierte Folie gemäß Beispiel 1 ("met. BOPP + ILC, metallisierte biaxial orientierte Polypropylenfolie mit inline Coating, ganz rechts), für eine handelsübliche nicht-metallisierte biaxial orientierte Polypropylenfolie mit gleicher Dicke ("BOPP", ganz links, die ganz linke Säule ist verkürzt dargestellt (siehe Tabelle 1, siehe auch Abbildung 2A für eine schematische Darstellung dieser Folie) und für dieselbe Folie mit Metallisierung ("met. BOPP", in der Mitte). Wie man sieht, wird die Sauerstoffdurchlässigkeit durch die erfindungsgemäße Folie gegenüber der handelsüblichen metallisierten BOPP Folie noch einmal dramatisch reduziert, ohne dass bei der Herstellung ein großer zusätzlicher Aufwand anfällt. Die Sauerstoffdurchlässigkeit wird fast um den Faktor 10 reduziert. Die Durchlässigkeit für Wasserdampf wird ebenfalls stark reduziert.

**Tabelle 1 zeigt die numerischen Daten der Folien:**

| | Sauerstoffdurchlässigkeit [cm³/m^{2∗}day] | Durchlässigkeit für Wasserdampf [g/m^{2∗}day] |
|---|---|---|
| BOPP | 1500* | 5 |
| met. BOPP | 60 | 0,3 |
| met. BOPP + ILC | 7 | 0,1 |

| | | |
|---|---|---|
| * In Abbildung 3 verkürzt dargestellt. | | |

Auch ist die Metallhaftung außerordentlich hoch und fast einzigartig für eine metallisierte biaxial orientierte Polypropylenfolie.

### Beispiel 2:

Dieses Beispiel wird entsprechend Beispiel 1 durchgeführt, jedoch mit folgenden Abwandlungen:
Die Folie enthält 6 Schichten mit einem Schichtaufbau AB-Z₁-C-Z₂-D, wobei Z₁ und Z₂ Zwischenschichten darstellen. Schicht C ist die Basisschicht und besteht aus Polypropylen-Homopolymer der Firma Repol (in Almazora Castellón, Spanien). Die Schichten B, Z1, Z2 und D enthalten Polypropylen-Copolymer. Die Materialien für die Schichten B, C, D, Z1 und Z2 werden alle getrennt voneinander mit Hilfe von Doppelschneckenextrudern extrudiert. Die Dicken der Lagen sind wie folgt: A: 100nm, B: 0,77pm, Z₁ : 2,52pm, C:11,04µm, Z₂: 2,53µm, D: 1,18.

Bei dem Recken in Längsrichtung haben die Vorheizwalzen Temperaturen im Bereich von 100 bis 120 °C, die Streckwalzen Temperaturen im Bereich von 65 bis 75°C und die Annealingwalzen Temperaturen im Bereich von 120 bis 130 °C. Beim Recken in Querrichtung hat die Vorheizzone eine Temperatur im Bereich von 180 bis 160 °C, die Streckzone weist Temperaturen von 160 bis 170 °C auf und die Annealingzone weist eine Temperatur im Bereich von 160 bis 170 °C auf. Die Film-Geschwindigkeit beim Austritt aus der Breitschlitzdüse beträgt 87m/min. Die Filmgeschwindigkeit nach dem Recken in Längsrichtung beträgt 400 m/min. Beim Auftragen der Polyurethan-Dispersion kommt eine 6 g/m² Gravurwalze zum Einsatz, wodurch eine etwa 6 µm dicke Flüssigkeitsschicht aufgetragen wird. Beim Erwärmen für das Recken in Querrichtung wird diese Schicht getrocknet und die verbleibende Schichtdicke beträgt 1 µm. Anschließend verringert sich die Schichtdicke durch das Recken weiter.

Die Filmbreite nach dem Recken in Längsrichtung beträgt 1100mm. Die Breite der Beschichtung (die Breite der Schicht A) betrug 1000mm.

Die Sauerstoffdurchlässigkeit der Folie beträgt 5cm³/m^{2∗}day und die Durchlässigkeit für Wasserdampf beträgt 0,1g/m^{2∗}day.

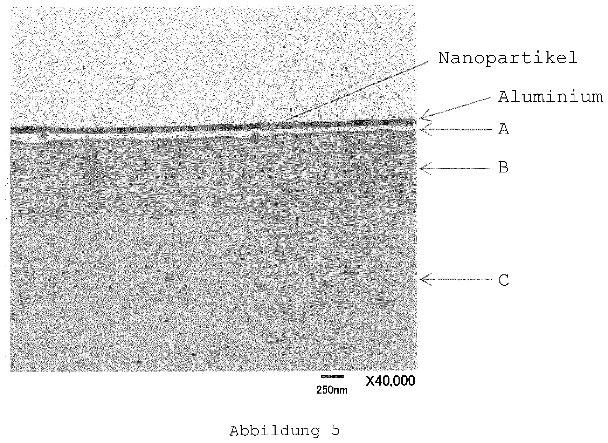

Abbildung 5 zeigt einen Querschnitt durch die erfindungsgemäße Folie gemäß Beispiel 2. Die Vergrößerung beträgt x40.000. Die dunkle dünne oberste Schicht ist die Aluminiumschicht. Die helle Schicht unter der Aluminiumschicht ist die Schicht A. Die beiden dunklen Punkte sind Nanopartikel. Die darunter liegende dicke dunkelgraue Sicht ist Schicht B. Es ist klar erkennbar, dass die Nanopartikel in der Lage sind, die Oberflächenrauhigkeit der Aluminiumschicht zu erhöhen ohne zu einer Öffnung in der Schicht zu führen. Die Nanopartikel haben daher keine oder nur eine sehr geringe negative Auswirkung auf die Barrierewirkung der Aluminiumschicht, sorgen jedoch für die notwendige Oberflächenrauheit, die ein Transport auf Walzen während der Verarbeitung ermöglicht und ein Verblocken beim Auf- und Abwickeln der Folie verhindert.

## Patentansprüche

1. Polypropylenfolie umfassend 4 Schichten (A) bis (D), die in der Reihenfolge von (A) bis (D) angeordnet sind, worin Schichten (B) bis (D) biaxial orientiertes Polypropylen umfassen und worin
Schicht (A) Polyurethan und Nanopartikel umfasst und eine Schichtdicke von 25 bis 300 nm aufweist,
Schicht (B) Polymere mit funktionellen Gruppen umfasst, welche mit Polyurethan kovalente Bindungen ausbilden können und direkt mit Schicht (A) verbunden ist,
Schicht (C) wenigstens eine Schichtdicke von 50 % der Gesamtdicke der Folie aufweist und
Schicht (D) eine Außenschicht der Folie darstellt und Antiblockmittel umfasst.

2. Folie nach Anspruch 1, **dadurch gekennzeichnet, dass** Schicht (A) eine Schichtdicke im Bereich von 50 bis 150 nm aufweist.

3. Folie nach einem der Ansprüche 1 oder 2, **dadurch gekennzeichnet, dass** Schicht (A) Nanopartikel aus amorphen Siliciumdioxid aufweist.

4. Folie nach einem der Ansprüche 1, 2 oder 3, **dadurch gekennzeichnet, dass** Schicht (A) Nanopartikel aufweist, deren mittlere Teilchengröße im Bereich von 20 bis 150 nm liegt.

5. Folie nach einem der vorangehenden Ansprüche, **dadurch gekennzeichnet, dass** Schicht (A) 0,5 bis 20 Gew.-% Nanopartikel enthält.

6. Folie nach einem der vorangehenden Ansprüche, **dadurch gekennzeichnet, dass** Schicht (B) ein Maleinsäureanhydrid modifiziertes Polypropylen umfasst.

7. Folie nach einem der vorangehenden Ansprüche, **dadurch gekennzeichnet, dass** Schicht (B) keine Antiblockmittel enthält.

8. Folie nach einem der vorangehenden Ansprüche, **dadurch gekennzeichnet, dass** sie eine Metallschicht oder eine Metalloxidschicht aufweist, die direkt mit der Oberfläche von Schicht (A) verbunden ist.

9. Folie nach einem der vorangehenden Ansprüche, **dadurch gekennzeichnet, dass** sie eine Aluminiumoxidschicht oder eine Siliziumdioxidschicht aufweist, die direkt mit der Oberfläche von Schicht (A) verbunden ist.

10. Lebensmittelverpackung umfassend eine Folie nach einem der vorangehenden Ansprüche.

11. Verfahren zur Herstellung einer Folie nach einem der Ansprüche 1 bis 7, umfassend die Schritte:
- Bereitstellen eines Films, der monoaxial in Längsrichtung verstreckt ist, Schichten (B) bis (D), mit einer Zusammensetzung wie in einem der Ansprüche 1 bis 6 beschrieben, umfasst und worin Schichten (B) und (D) Außenschichten des Films sind,
- Aufbringen einer Schicht einer flüssigen Dispersion enthaltend Polyurethan und Nanopartikel auf Schicht (B),
- Trocknen der flüssigen Dispersion unter Herstellung der Schicht (A),
- Recken des Films in Querrichtung unter Herstellung einer biaxial orientierten Folie.

12. Verfahren zur Herstellung einer Folie nach einem der Ansprüche 1 bis 7, umfassend die Schritte:
- Bereitstellen eines Films umfassend Schichten (B) bis (D), mit einer Zusammensetzung wie in einem der Ansprüche 1 bis 6 beschrieben, in der die Schichten (B) bis (D) nicht orientiert sind und Schichten (B) und (D) Außenschichten des Films sind,
- Aufbringen einer flüssigen Dispersion enthaltend Polyurethan und Nanopartikel auf die Schicht (B),
- Trocknen der flüssigen Dispersion durch Erwärmen unter Herstellung der Schicht (A),
- Simultanes Recken des Films in Längsrichtung und in Querrichtung unter Herstellung einer biaxial orientierten Folie.

13. Verfahren nach einem der Ansprüche 11 oder 12, **dadurch gekennzeichnet, dass** die Oberfläche der Schicht (B) vor dem Aufbringen der flüssigen Dispersion einer Oberflächenbehandlung unterzogen wird, welche bevorzugt eine Corona-Behandlung ist.

14. Verfahren nach einem der Ansprüche 11 bis 13, **dadurch gekennzeichnet, dass** die flüssige Dispersion im Reverse Gravur Kiss Coating Verfahren auf Schicht (B) aufgetragen wird.

15. Verfahren nach einem der Ansprüche 11 bis 14, **dadurch gekennzeichnet, dass** die durch die flüssige Dispersion auf Schicht (B) gebildete Nassschicht eine Masse von 3 bis 20 g/m² und besonders bevorzugt 6 bis 10 g/m² aufweist.

16. Verfahren nach einem der Ansprüche 11 bis 15, **dadurch gekennzeichnet, dass** die flüssige Dispersion eine wässrige Dispersion ist.

17. Verfahren gemäß einem der Ansprüche 11 bis 16, **dadurch gekennzeichnet, dass** das Reckverhältnis in Längsrichtung im Bereich von 2 bis 8 liegt.

18. Verfahren gemäß einem der Ansprüche 11 bis 17, **dadurch gekennzeichnet, dass** das Reckverhältnis in Querrichtung im Bereich von 4 bis 14 liegt.

## Claims

1. Polypropylene film comprising 4 layers (A) to (D) which are arranged in the order of (A) to (D), wherein layers (B) to (D) comprise biaxially oriented polypropylene and wherein
layer (A) comprises polyurethane and nanoparticles and has a layer thickness of 25 to 300 nm,
layer (B) comprises polymers having functional groups which can form covalent bonds with polyurethane and is bonded directly to layer (A),
layer (C) has at least a layer thickness of 50% of the total thickness of the film and
layer (D) is an outer layer of the film and comprises an antiblock agent.

2. Film according to claim 1, **characterised in that** layer (A) has a layer thickness in the range of from 50 to 150 nm.

3. Film according to either claim 1 or claim 2, **characterised in that** layer (A) comprises nanoparticles consisting of amorphous silicon dioxide.

4. Film according to claim 1, claim 2 or claim 3, **characterised in that** layer (A) comprises nanoparticles of which the average particle size is in the range of from 20 to 150 nm.

5. Film according to any of the preceding claims, **characterised in that** layer (A) contains 0.5 to 20 wt.% of nanoparticles.

6. Film according to any of the preceding claims, **characterised in that** layer (B) comprises a maleic-anhydride-modified polypropylene.

7. Film according to any of the preceding claims, **characterised in that** layer (B) contains no antiblock agent.

8. Film according to any of the preceding claims, **characterised in that** it comprises a metal layer or a metal oxide layer which is directly bonded to the surface of layer (A).

9. Film according to any of the preceding claims, **characterised in that** it comprises an aluminium oxide layer or a silicon dioxide layer which is directly bonded to the surface of layer (A).

10. Food packaging comprising a film according to any of the preceding claims.

11. Method for producing a film according to any of claims 1 to 7, comprising the following steps:
- providing a film which is monoaxially stretched in the longitudinal direction, comprises layers (B) to (D) which have a composition as per any of claims 1 to 6, and wherein layers (B) and (D) are outer layers of the film;
- applying a layer of a liquid dispersion containing polyurethane and nanoparticles to layer (B);
- drying the liquid dispersion to produce the layer (A);
- stretching the film in the transverse direction to produce a biaxially oriented film.

12. Method for producing a film according to any of claims 1 to 7, comprising the following steps:
- providing a film comprising layers (B) to (D), which have a composition as per any of claims 1 to 6, in which the layers (B) to (D) are not oriented and layers (B) and (D) are outer layers of the film;
- applying a liquid dispersion containing polyurethane and nanoparticles to the layer (B);
- drying the liquid dispersion by means of heating to produce the layer (A);
- simultaneously stretching the film in the longitudinal direction and in the transverse direction to produce a biaxially oriented film.

13. Method according to either claim 11 or claim 12, **characterised in that**, before applying the liquid dispersion, the surface of the layer (B) is subjected to a surface treatment, which is preferably a corona treatment.

14. Method according to any of claims 11 to 13, **characterised in that** the liquid dispersion is applied to layer (B) using the reverse gravure kiss coating method.

15. Method according to any of claims 11 to 14, **characterised in that** the wet layer formed by the liquid dispersion on layer (B) has a mass of 3 to 20 g/m² and particularly preferably 6 to 10 g/m².

16. Method according to any of claims 11 to 15, **characterised in that** the liquid dispersion is an aqueous dispersion.

17. Method according to any of claims 11 to 16, **characterised in that** the stretching ratio in the longitudinal direction is in the range of from 2 to 8.

18. Method according to any of claims 11 to 17, **characterised in that** the stretching ratio in the transverse direction is in the range of from 4 to 14.

## Revendications

1. Feuille de polypropylène comprenant 4 couches (A) à (D) disposées dans l'ordre de (A) à (D),
dans laquelle
les couches (B) à (D) contiennent du polypropylène orienté biaxialement et la couche (A) contient du polyuréthane et des nanoparticules et présente une épaisseur de couche de 25 à 300 nm,
la couche (B) contient des polymères ayant des groupes fonctionnels capables de former des liaisons covalentes avec le polyuréthane et est directement reliée à la couche (A),
la couche (C) présente une épaisseur d'au moins 50 % de l'épaisseur totale de la feuille et
la couche (D) est une couche extérieure de la feuille et contient des agents anti-bloquants.

2. Feuille selon la revendication 1,
**caractérisée en ce que**
la couche (A) présente une épaisseur comprise entre 50 et 150 nm.

3. Feuille selon l'une des revendications 1 ou 2,
**caractérisée en ce que**
la couche (A) contient des nanoparticules de dioxyde de silicium amorphe.

4. Feuille selon l'une des revendications 1, 2 ou 3,
**caractérisée en ce que**
la couche (A) contient des nanoparticules dont la taille moyenne est dans la plage de 20 à 150 nm.

5. Feuille selon l'une des revendications précédentes,
**caractérisée en ce que**
la couche (A) contient de 0,5 à 20 % en poids de nanoparticules.

6. Feuille selon l'une des revendications précédentes,
**caractérisée en ce que**
la couche (B) contient un polypropylène modifié à l'anhydride d'acide maléique.

7. Feuille selon l'une des revendications précédentes,
**caractérisée en ce que**
la couche (B) ne contient aucun agent anti-bloquant.

8. Feuille selon l'une des revendications précédentes,
**caractérisée en ce que**
elle comporte une couche métallique ou une couche d'oxyde métallique directement liée à la surface de la couche (A).

9. Feuille selon l'une des revendications précédentes,
**caractérisée en ce que**
elle comporte une couche d'oxyde d'aluminium ou une couche de dioxyde de silicium directement liée à la surface de la couche (A).

10. Emballage de produits alimentaires comprenant une feuille selon l'une des revendications précédentes.

11. Procédé de réalisation d'une feuille selon l'une des revendications 1 à 7, comprenant les étapes consistant à :
- fournir un film étiré monoaxialement dans la direction longitudinale, comprenant des couches (B) à (D), ayant une composition telle que décrite dans l'une des revendications 1 à 6, et les couches (B) et (D) étant des couches extérieures du film,
- appliquer une couche d'une dispersion liquide, contenant du polyuréthane et des nanoparticules, sur la couche (B),
- faire sécher la dispersion liquide en réalisant la couche (A),
- étirer le film dans la direction transversale en réalisant une feuille orientée biaxialement.

12. Procédé de réalisation d'une feuille selon l'une des revendications 1 à 7, comprenant les étapes consistant à :
- fournir un film comprenant des couches (B) à (D), ayant une composition telle que décrite dans l'une des revendications 1 à 6, et les couches (B) à (D) n'étant pas orientées et les couches (B) et (D) étant des couches extérieures du film,
- appliquer une dispersion liquide, contenant du polyuréthane et des nanoparticules, sur la couche (B),
- faire sécher la dispersion liquide par chauffage en réalisant la couche (A),
- étirer le film simultanément dans la direction longitudinale et dans la direction transversale en réalisant une feuille orientée biaxialement.

13. Procédé selon l'une des revendications 11 ou 12,
**caractérisé en ce que**
la surface de la couche (B) est soumise à un traitement de surface qui est de préférence un traitement corona, avant l'application de la dispersion liquide.

14. Procédé selon l'une des revendications 11 à 13,
**caractérisé en ce que**
la dispersion liquide est appliquée sur la couche (B) par le procédé dit "Reverse Gravur Kiss Coating" (de couchage par gravure à léchage à inversion).

15. Procédé selon l'une des revendications 11 à 14,
**caractérisé en ce que**
la couche humide formée par la dispersion liquide sur la couche (B) présente une masse de 3 à 20 g/m², et de préférence de 6 à 10 g/m².

16. Procédé selon l'une des revendications 11 à 15,
**caractérisé en ce que**
la dispersion liquide est une dispersion aqueuse.

17. Procédé selon l'une des revendications 11 à 16,
**caractérisé en ce que**
le rapport d'étirage dans la direction longitudinale est dans la plage de 2 à 8.

18. Procédé selon l'une des revendications 11 à 17,
**caractérisé en ce que**
le rapport d'étirage dans la direction transversale est dans la plage de 4 à 14.
